# FASCICULE DE BREVET EUROPEEN

(11) **EP 3 255 355 B1**
(45) Date de publication et mention de la délivrance du brevet: **03.10.2018**
(21) Numéro de dépôt: 17175241.3
(22) Date de dépôt: 09.06.2017
(51) Int. Cl.: F24H 4/04, F25B 7/00, F25B 30/02, F24D 11/02, F25B 13/00

(54) **INSTALLATION DE CHAUFFAGE AVEC ÉTAGEMENT HYDRAULIQUE INTÉGRÉ**
HEIZANLAGE MIT INTEGRIERTER HYDRAULISCHER STUFENSTRUKTUR
HEATING SYSTEM WITH INTEGRATED HYDRAULIC STEPPING

(30) Priorité: 10.06.2016 FR 1655329
(43) Date de publication de la demande: 13.12.2017
(73) Titulaire: Société Industrielle de Chauffage (SIC), 59660 Merville (FR)
(72) Inventeur: SAISSET, Luc, 38460 VILLEMOIRIEU (FR)
(74) Mandataire: Petit, Maxime

(56) Documents cités:
- EP-A1- 2 827 068
- EP-A2- 2 532 983
- WO-A1-2012/005608
- US-A1- 2010 000 709

## Description

L'invention concerne une installation de chauffage.

Il est connu que la fonction d'un système de pompe à chaleur air /eau destiné au chauffage des locaux est de prélever de la chaleur dans le milieu ambiant extérieur à une température correspondant à des conditions hivernales et de restituer cette chaleur à un fluide caloporteur. Ce fluide caloporteur, généralement de l'eau additivée ou non de produits antigel ou anticorrosion, souvent appelée eau de chauffage, sert à chauffer les locaux à travers divers systèmes d'échange thermique avec l'air intérieur tels que des planchers chauffants ou des radiateurs.

Ces systèmes de pompe à chaleur air / eau peuvent être construits en deux parties, l'une prenant place à l'extérieur du local, l'autre à l'intérieur. On parle alors de système de pompe à chaleur à éléments séparés.

La partie extérieure contient toute la partie thermodynamique de la machine hormis le condenseur, la partie intérieure contient le condenseur et tout ce qui concerne le circuit de chauffage à eau chaude. Les deux parties sont reliées par des conduits contenant le fluide caloporteur à changement d'état propre à ce type de machine (aussi appelé fluide frigorifique ou fluide réfrigérant), par exemple du R410A ou du R32.

Le système de chauffage associé comprend généralement des émetteurs autorisant les températures d'eau de chauffage les plus basses possibles afin que l'écart entre la température de la source froide (air extérieur) et la température de la source chaude (eau du circuit de chauffage) soit le plus réduit possible (principe de Carnot). Les planchers chauffants à basse température ou les radiateurs à basse température représentent deux exemples de ce type d'émetteurs. Leur température de fonctionnement en ce qui concerne l'eau de chauffage se situe entre 27°C et 55°C maximum.

Lorsqu'une habitation a été conçue initialement pour être chauffée par une chaudière à combustible liquide ou gazeux, le système de chauffage associé est par contre, prévu pour fonctionner à des températures plus hautes s'étendant sur une plage pouvant aller de 55°C à 80°C.

Le remplacement de la chaudière initiale par un système de pompe à chaleur conduit à la conception de systèmes de pompe à chaleur adaptés à ces régimes de température (aussi appelés régimes d'eau).

Ces systèmes de pompes à chaleur dites « haute température » peuvent être conçus de deux façons :
a) Soit la totalité du circuit thermodynamique est revue pour cet usage (compresseur et fluide sont alors adaptés), ce qui conduit en général à des machines coûteuses et qui plus est, peu performantes sur certaines parties du domaine d'utilisation compte tenu des contraintes techniques.
b) Soit un deuxième circuit frigorifique est rajouté sur le premier circuit frigorifique par rapport auquel il constitue un deuxième étage. Ce deuxième étage peut utiliser un deuxième fluide frigorifique bien adapté aux hautes températures tel du R134a par exemple.

Cette deuxième solution connue de l'état de l'art est particulièrement intéressante lorsque le deuxième étage est rajouté au niveau de l'unité intérieure. En effet, la partie extérieure basse température reste alors identique aux machines basse température courantes, ce qui permet d'en conserver avantageusement le prix et la bonne adaptation aux températures extérieures basses.

Il est également connu du document EP 2 532 983 que les deux étages de ce type de solution peuvent ne pas communiquer par un échange direct entre les deux circuits frigorifiques, par exemple au travers d'un échangeur à plaques, mais en utilisant l'eau du circuit de chauffage comme fluide intermédiaire.

Le document EP 2 827 068 reprend ce type de géométrie en insistant sur la nécessité d'utilisation d'un ballon tampon (déjà prévu par le document EP 2 532 983) de taille suffisamment importante (150l par exemple selon le document EP 2 827 068) pour assurer l'apport d'énergie lors des cycles de dégivrage du 1^{er} étage ou lorsqu'en cours de fonctionnement la puissance thermique des deux étages est différente.

La juxtaposition des trois échangeurs thermiques nécessaires (condenseur du premier étage, évaporateur du second étage et condenseur du second étage) et du ballon tampon rend ce type de solution assez volumineuse.

L'invention prévoit de pallier à cet inconvénient en proposant une installation de chauffage utilisant le principe de la pompe à chaleur air/eau et comprenant :
- au moins un circuit de chauffage dans lequel de l'eau est apte à circuler,
- un système de pompe à chaleur (PAC) relié audit au moins un circuit de chauffage et qui est apte à chauffer l'eau dudit au moins un circuit de chauffage, le système de PAC comprenant deux étages qui comportent chacun un compresseur, un condenseur, un détendeur et un évaporateur, le premier étage étant configuré pour opérer dans un mode de chauffage basse température entre l'air extérieur et l'eau provenant du retour dudit au moins un circuit de chauffage, le deuxième étage étant configuré pour opérer dans un mode de chauffage haute température entre , d'une part, une conduite reliée au retour dudit circuit et, d'autre part, une conduite de sortie reliée au départ dudit au moins un circuit de chauffage, caractérisée en ce que le condenseur du premier étage et l'évaporateur du deuxième étage sont configurés soit pour être immergés dans un même contenant d'eau soit pour être immergés respectivement dans deux contenants d'eau communiquant entre eux par un ou plusieurs conduits, le primaire de l'évaporateur du second étage et le secondaire du condenseur du premier étage utilisant la même eau du ou des contenants.

Le fait que le condenseur du premier étage et l'évaporateur du deuxième étage soient configurés pour être immergés dans un même contenant, ou dans deux contenants communiquant entre eux par un ou plusieurs conduits, permet de réduire l'encombrement de l'installation. Cet agencement permet également de simplifier la conception de l'installation, notamment en ce qui concerne les moyens qui permettent de passer d'un mode de chauffage à un autre.

Le condenseur du premier étage est ainsi apte à rejeter dans le contenant (il s'agit du contenant dans lequel est disposé le condenseur lorsqu'il y a plusieurs contenants) l'eau circulant dans le secondaire du condenseur quel que soit le mode de chauffage (basse température ou haute température). L'eau est chauffée grâce au premier étage qui prélève de l'énergie sur l'air extérieur (via un fluide primaire circulant dans le premier étage, notamment au niveau de l'évaporateur de ce dernier) et la restitue à une température supérieure à l'eau circulant dans le secondaire du condenseur. L'eau remplissant le ou les contenants (lorsqu'il y a deux contenants) et provenant du secondaire du condenseur est donc chauffée par le premier étage thermodynamique.

Par ailleurs, l'évaporateur du deuxième étage est apte à puiser son fluide primaire (chauffé) dans le contenant (il s'agit du contenant dans lequel est disposé l'évaporateur lorsqu'il y a plusieurs contenants) lorsque l'installation opère en mode de chauffage haute température (deuxième étage en fonctionnement en sus du premier étage). Le fluide primaire de l'évaporateur est ici le même que le fluide secondaire du condenseur puisqu'il s'agit de l'eau remplissant le ou les contenants (lorsqu'il y a deux contenants).

On notera qu'à volume constant deux contenants peuvent être plus facilement logeables, en termes de géométrie, qu'un seul contenant, ce qui confère une grande souplesse d'utilisation.

Par ailleurs, un dispositif de mise en recirculation du fluide dans les contenants et entre les deux contenants, tel qu'une pompe, peut être installé sur l'un des conduits reliant les deux contenants. Cet agencement peut procurer là aussi une plus grande souplesse d'implantation du dispositif (ex : pompe).

L'eau, additivée ou non, du ou des contenants (s'il y en a plusieurs) peut être mise en recirculation selon le mode de fonctionnement de l'installation.

Selon d'autres caractéristiques possibles :
- l'eau utilisée par le primaire de l'évaporateur du second étage et le secondaire du condenseur du premier étage est soit commune avec ledit au moins un circuit de chauffage de l'installation soit séparée dudit au moins un circuit de chauffage de l'installation ;
- en mode de chauffage basse température, par exemple jusqu'à 55°C, l'installation est configurée pour que le secondaire du condenseur du premier étage soit en communication directe avec ledit au moins un circuit de chauffage (l'eau dudit au moins un circuit de chauffage alimente le secondaire du condenseur du premier étage);
- en mode de chauffage haute température, par exemple au-delà de 55°C, l'installation est configurée pour que l'eau dudit au moins un circuit de chauffage alimente le secondaire du condenseur du deuxième étage et n'alimente plus le secondaire du condenseur du premier étage;
- l'installation comprend au moins un organe de contrôle de flux (telle qu'une électrovanne simple passage) entre l'entrée du secondaire du condenseur du premier étage et l'entrée du secondaire du condenseur du deuxième étage, ledit au moins un organe de contrôle de flux permettant à l'installation, en passant d'un état ouvert à un état fermé ou inversement, de fonctionner en mode de chauffage basse température (l'eau dudit au moins un circuit de chauffage alimente le secondaire du condenseur du premier étage où elle est chauffée avant d'alimenter le secondaire du condenseur du deuxième étage non opérationnel) ou haute température (l'eau dudit au moins un circuit de chauffage alimente directement le secondaire du condenseur du deuxième étage et n'alimente plus le secondaire du condenseur du premier étage) ;
- l'installation comprend un dispositif de pompage qui est actionné afin de mettre en recirculation l'eau dans le contenant , ou les contenants s'il y en a deux, en boucle entre le condenseur et l'évaporateur de sorte que, d'une part, l'eau sortant du secondaire du condenseur alimente le primaire de l'évaporateur et, d'autre part, l'eau sortant du primaire de l'évaporateur alimente le secondaire du condenseur ; l'actionnement du dispositif de pompage est effectué en mode de chauffage haute température lorsque le deuxième étage de l'installation fonctionne, qu'il y ait un seul ou deux circuits de chauffage ;
- ledit au moins un circuit de chauffage comprend deux circuits de chauffage distincts, un premier circuit de chauffage basse température et un second circuit de chauffage haute température ;
- l'installation est configurée pour que, en mode de chauffage basse température des deux circuits, l'eau de retour du premier et du deuxième circuits de chauffage alimente l'entrée du secondaire du condenseur du premier étage où elle est chauffée (les eaux de retour des deux circuits sont mélangées dans ce mode) et la sortie du secondaire du condenseur du premier étage alimente à la fois le départ du premier circuit de chauffage et le départ du second circuit de chauffage ;
- l'installation est configurée pour que, en mode de chauffage basse température du premier circuit et en mode de chauffage haute température du deuxième circuit :
   l'eau de retour du premier circuit de chauffage alimente l'entrée du secondaire du condenseur du premier étage où elle est chauffée et la sortie du secondaire du condenseur du premier étage alimente à la fois le départ du premier circuit de chauffage et l'entrée de l'évaporateur du deuxième étage,
   l'eau est également mise en recirculation en boucle dans le contenant, ou les contenants s'il y en a deux, grâce au dispositif de pompage actionné,
   l'eau de retour du second circuit de chauffage alimente l'entrée du secondaire du condenseur du deuxième étage où elle est chauffée et la sortie du secondaire du condenseur du deuxième étage alimente le départ du deuxième circuit de chauffage ;
- l'installation comporte un organe de contrôle de flux qui est configuré, d'une part, pour permettre à l'eau chauffée provenant du secondaire du condenseur du premier étage d'alimenter à la fois le départ du premier circuit de chauffage et le départ du deuxième circuit de chauffage, en mode de chauffage basse température des deux circuits et, d'autre part, pour rendre indépendants les deux circuits de chauffage, en mode de chauffage basse température du premier circuit et en mode de chauffage haute température du deuxième circuit ; l'organe de contrôle de flux est ainsi configuré pour empêcher l'eau provenant du secondaire du condenseur du premier étage d'alimenter le départ du deuxième circuit de chauffage et pour permettre à l'eau de retour du deuxième circuit de chauffage d'alimenter le secondaire du condenseur du deuxième étage et non plus le retour du premier circuit de chauffage ; l'organe de contrôle de flux est par exemple une vanne trois voies.

D'autres caractéristiques et avantages apparaitront au cours de la description qui va suivre, donnée uniquement à titre d'exemple non limitatif et faite en référence aux dessins annexés, sur lesquels :
- la figure 1 est une vue schématique simplifiée d'une installation de chauffage selon un premier mode de réalisation de l'invention ;
- la figure 2 est une vue schématique simplifiée de l'installation de la figure 1 en mode de fonctionnement basse température ;
- la figure 3 est une vue schématique simplifiée de l'installation de la figure 1 en mode de fonctionnement haute température ;
- la figure 4 est une vue schématique détaillée d'un exemple d'installation de la figure 1 ;
- la figure 5 est une vue schématique simplifiée d'une installation de chauffage selon un deuxième mode de réalisation de l'invention ;
- la figure 6 est une vue schématique simplifiée de l'installation de la figure 5 en mode de fonctionnement basse température pour les deux circuits;
- la figure 7 est une vue schématique simplifiée de l'installation de la figure 5 en mode de fonctionnement basse température pour le premier circuit et en mode de fonctionnement haute température pour le deuxième circuit ;
- la figure 8 est une vue schématique simplifiée d'une installation de chauffage selon un autre mode de réalisation de l'invention.

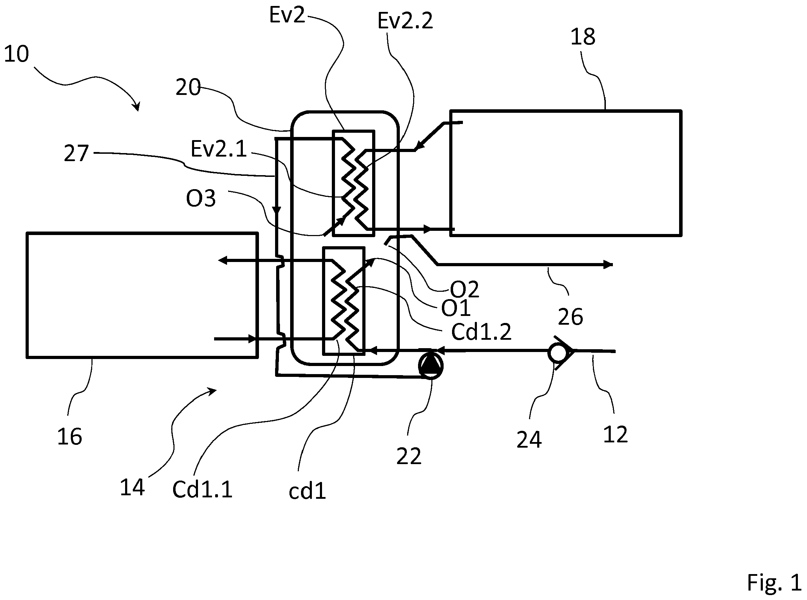

Comme représenté schématiquement à la figure 1 et désigné par la référence générale notée 10, une installation de chauffage selon un premier mode de réalisation de l'invention utilise le principe de la pompe à chaleur air/eau.

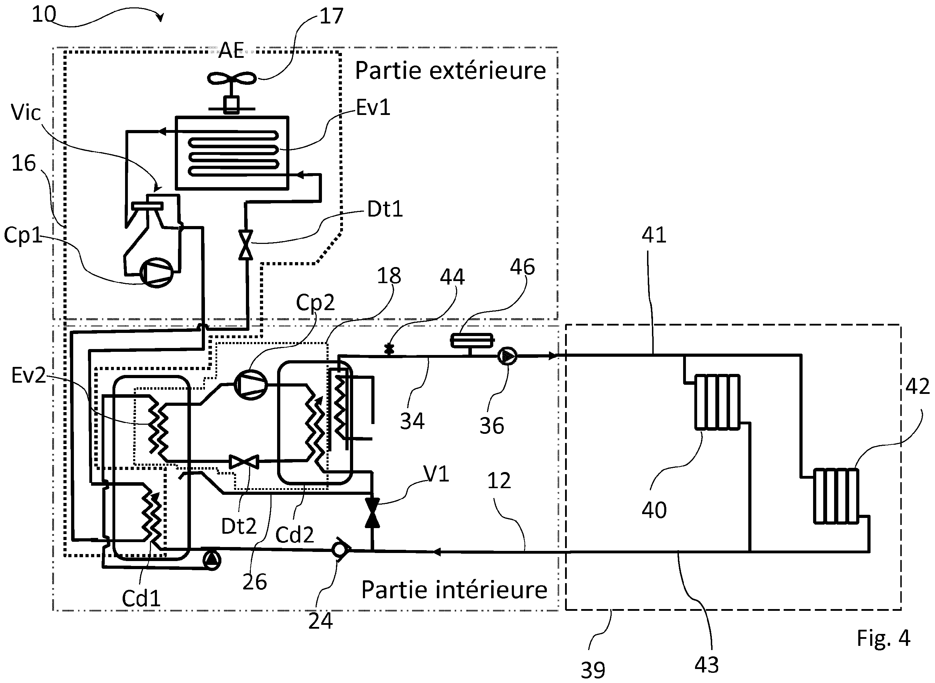

Cette installation 10 comprend :
- un circuit de chauffage dans lequel un fluide caloporteur tel que de l'eau (ou de l'eau additivée, c'est-à-dire de l'eau comportant des additifs tels qu'un antigel comme, par exemple, du mono propylène glycol) est apte à circuler (seule la conduite 12 directement reliée au retour du circuit de chauffage est représentée ici, le circuit de chauffage est, quant à lui, représenté sur la figure 4),
- un système de pompe à chaleur (PAC) 14 relié au circuit de chauffage et qui est apte à chauffer l'eau du circuit de chauffage.

Le système de PAC 14 comprend deux étages thermodynamiques 16 et 18 qui comportent chacun un compresseur, un condenseur, un détendeur et un évaporateur. Ces différents composants sont illustrés sur la figure 4 qui sera décrite plus loin. Sur la figure 1 seuls le condenseur Cd1 du premier étage 16 et l'évaporateur Ev2 du deuxième étage 18 sont représentés.

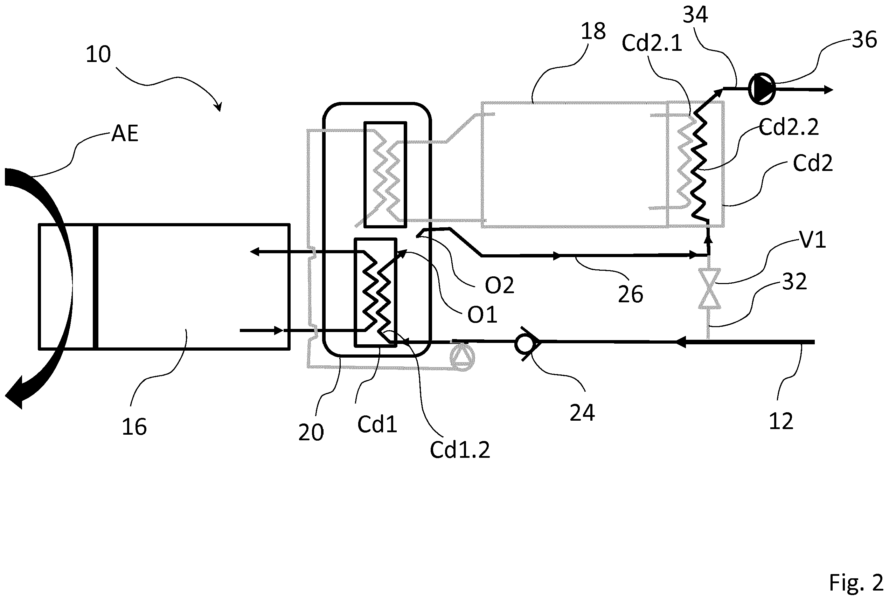

Le premier étage 16 est configuré pour opérer, dans un mode de chauffage basse température (ce mode de fonctionnement est illustré à la figure 2), entre l'air extérieur et l'eau provenant du retour du circuit de chauffage, via la conduite 12.

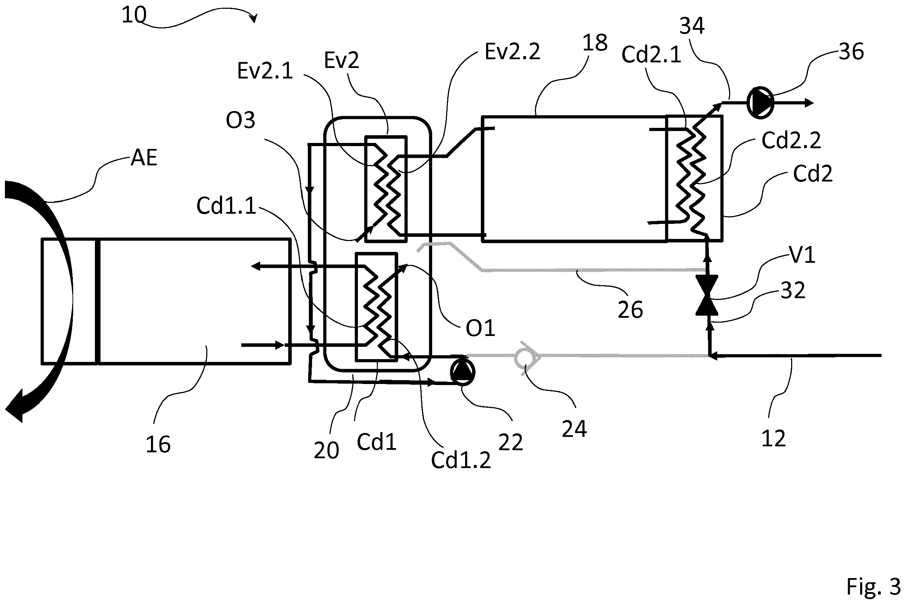

Le deuxième étage 18 est configuré pour opérer, dans un mode de chauffage haute température (ce mode de fonctionnement est illustré à la figure 3), entre deux conduites respectivement reliées au départ et au retour du circuit de chauffage, comme on le verra plus loin.

Comme représenté à la figure 1, le condenseur Cd1 du premier étage et l'évaporateur Ev2 du deuxième étage sont configurés pour être immergés dans un même contenant 20 rempli de fluide, c'est-à-dire dans un même volume de fluide, par exemple d'eau. Ce contenant est un réservoir ou enceinte (il peut s'agir d'un ballon ou d'une cuve) qui contient les deux échangeurs thermiques et qui est, par exemple, rempli par l'eau du circuit de chauffage (on notera qu'un autre fluide caloporteur que l'eau peut alternativement être utilisé dans le circuit de chauffage). L'eau du contenant est utilisée pour le fonctionnement du condenseur Cd1 du premier étage et de l'évaporateur Ev2 du deuxième étage.

En mode de chauffage haute température (ce mode de fonctionnement est illustré à la figure 3), le premier étage 16 est configuré pour opérer entre l'air extérieur et l'eau du contenant 20.

Sur la figure 1 sont également représentés :
- le primaire Cd1.1 et le secondaire Cd1.2 du condenseur Cd1 du premier étage 16, la conduite 12 alimentant le secondaire Cd1.2,
- le primaire Ev2.1 et le secondaire Ev2.2 de l'évaporateur Ev2 du deuxième étage 18,
- une pompe 22 ou tout autre dispositif qui assure la mise en recirculation de l'eau dans le contenant 20,
- un organe anti-retour de flux 24, tel qu'un clapet anti-retour, monté sur la conduite 12 et qui empêche tout retour d'eau dans le retour du circuit de chauffage (via la conduite 12).

Par ailleurs, le secondaire Cd1.2 du condenseur Cd1 présente une extrémité libre pourvue d'un orifice de sortie O1 qui permet à l'eau circulant dans le secondaire Cd1.2 de remplir le contenant 20.

L'installation comprend également une conduite 26 ayant une extrémité libre pourvue d'un orifice d'entrée O2 qui est à l'intérieur du contenant 20 afin de permettre à de l'eau contenue dans ce dernier d'emprunter l'orifice O2 pour sortir du contenant et circuler dans la conduite 26.

Le primaire Ev2.1 de l'évaporateur Ev2 présente une extrémité libre pourvue d'un orifice d'entrée O3 qui est à l'intérieur du contenant 20 (dans une zone distante de celle où se trouve l'orifice O2) afin que de l'eau contenue dans le contenant 20 puisse emprunter l'orifice O3 et circuler dans le primaire Ev2.1.

On notera qu'un conduit externe 27 raccorde la sortie du primaire Ev2.1 à l'entrée du secondaire Cd1.2 afin de permettre la mise en recirculation de l'eau. La pompe 22 est notamment installée sur ce conduit externe.

La figure 2 illustre un mode de fonctionnement basse température de l'installation de la figure 1 et des détails additionnels de la PAC et de l'installation de chauffage y sont représentés. En particulier, le condenseur Cd2 du deuxième étage 18 est représenté avec son primaire Cd2.1 et son secondaire Cd2.2.

L'installation comprend:
- une dérivation 32 munie d'un organe de contrôle de flux (arrêt ou passage de flux) V1 tel qu'une vanne (ex : électrovanne), et qui est raccordée en aval de la conduite 26 sortant du contenant 20,
- le secondaire Cd2.2 du condenseur Cd2,
- une conduite 34 raccordée, d'une part, à la sortie du secondaire Cd2.2 et, d'autre part, au départ du circuit de chauffage (non représenté ici), une pompe 36 installée sur la conduite 34 faisant circuler l'eau vers les émetteurs non représentés du circuit de chauffage.

### En mode de fonctionnement basse température :

- le deuxième étage 18 est à l'arrêt (le compresseur de cet étage est arrêté),
- la vanne V1 est fermée,
- le premier étage 16 prélève de l'énergie sur l'air extérieur AE (cet air est mis en mouvement par un ventilateur non représenté ici et le compresseur de cet étage, également non représenté ici, est en marche) et la restitue au condenseur Cd1 de cet étage à une température supérieure à celle de l'eau de retour du circuit de chauffage, chauffant ainsi l'eau de retour du circuit de chauffage circulant notamment dans la conduite 12 (l'eau est par exemple à une température de 55°C en sortie du condenseur),
- l'eau chauffée dans le condenseur Cd1 est rejetée dans le contenant 20 par l'orifice O1, puis est prélevée de ce contenant par l'orifice O2 (soutirage) pour circuler dans la conduite 26 et alimenter le secondaire Cd2.2 du condenseur Cd2 (l'eau provenant de la sortie du premier étage traverse le condenseur Cd2 sans changement de température),
- la pompe 36 envoie l'eau sortant du secondaire Cd2.2 du condenseur Cd2 dans la conduite 34, vers la conduite de départ (non représentée) du circuit de chauffage.

Dans ce mode de fonctionnement, l'eau est par exemple chauffée à 55°C par le premier étage 16.

La figure 3 illustre un mode de fonctionnement haute température de l'installation de la figure 1. Les deux étages 16 et 18 sont en fonctionnement dans ce mode.

### En mode de fonctionnement haute température :

- le premier étage 16 prélève de l'énergie sur l'air extérieur AE et la restitue au condenseur Cd1 de cet étage à une température supérieure (ex : 55°C),
- la pompe 22 fait recirculer de l'eau dans le secondaire Cd1.2 du condenseur Cd1 à partir d'eau qui est prélevée dans le contenant par l'orifice O3 et qui traverse le primaire Ev2.1 de l'évaporateur Ev2 du deuxième étage 18,
- l'eau alimentant le secondaire Cd1.2 et réchauffée dans ce dernier débouche directement dans le contenant 20 par l'orifice O1,
- l'organe anti-retour 24 empêche que l'eau mise en recirculation par la pompe 22 ne soit envoyée dans le circuit de chauffage,
- la vanne V1 est ouverte et l'eau de retour du circuit de chauffage circulant dans la conduite 12 peut donc passer par la dérivation 32 et est envoyée dans le secondaire Cd2.2 du condenseur Cd2 du deuxième étage 18,
- le deuxième étage 18 prélève ainsi de l'énergie sur l'eau contenue dans le contenant 20 au niveau de l'évaporateur Ev2 et en délivre à l'eau du circuit de chauffage à partir du condenseur Cd2 (le compresseur du deuxième étage est en marche),
- la pompe 36 envoie l'eau sortant du secondaire Cd2.2 du condenseur Cd2 (eau chauffée à haute température par exemple au-delà de 55°C et notamment à une température de l'ordre de 60 à 70°C) dans la conduite 34, vers le départ du circuit de chauffage.

Ainsi, dans les deux modes de fonctionnement précités l'eau (ou l'eau additivée) chauffée par le premier étage et sortant du secondaire du condenseur Cd1 se déverse dans le contenant 20.

Cette eau chauffée est :
- soit directement prélevée dans le contenant pour alimenter le circuit de chauffage (mode basse température),
- soit prélevée dans le contenant par le primaire de l'évaporateur du deuxième étage pour faire fonctionner ce dernier et générer au condenseur dudit deuxième étage une température supérieure à celle de l'eau prélevée, l'eau étant remise en circulation dans le contenant via le secondaire du condenseur du premier étage (circulation en boucle du fluide dans ce mode haute température grâce au dispositif de pompage 22).

Dans le mode haute température l'eau du circuit de chauffage passe directement dans le secondaire du condenseur du deuxième étage pour être chauffée à une haute température.

On notera que dans le mode haute température le deuxième étage est configuré pour opérer entre la conduite 12 (reliée au retour du circuit de chauffage) et la conduite 34 (reliée au départ du circuit de chauffage), en court-circuitant la sortie du premier étage (secondaire Cd1.2 du condenseur Cd1).

Plusieurs modes de dégivrage de l'installation de chauffage (c'est-à-dire plus précisément de l'évaporateur du premier étage) sont envisageables selon les circonstances d'utilisation de cette installation.

De manière générale, quel que soit le mode de chauffage utilisé deux niveaux de puissance de dégivrage sont accessibles. Quel que soit le mode de chauffage (haute température ou basse température), le premier niveau de puissance de dégivrage est permis grâce à l'utilisation de l'énergie calorifique du fluide (ex : eau) remplissant le contenant.

Les deux niveaux de puissance de dégivrage perturbent chacun de manière progressive l'installation entre le premier et le second niveau.

Si l'installation est en mode de fonctionnement haute température (fig.3):
- et si le dégivrage n'a pas besoin d'être trop sévère (peu d'énergie est nécessaire pour procéder au dégivrage et on ne veut pas trop perturber le fonctionnement de l'installation), alors le cycle du premier étage 16 est inversé (l'évaporateur génère de la chaleur) et la pompe 22 est maintenue en marche (l'énergie du contenant 20 est ainsi utilisée pour le dégivrage) ;
- et si le dégivrage nécessite davantage d'énergie, alors la vanne V1 est fermée afin de puiser des calories dans le circuit de chauffage.

Si l'installation est en mode de fonctionnement basse température (fig.2):
- et si le dégivrage n'a pas besoin d'être trop sévère (peu d'énergie est nécessaire pour procéder au dégivrage et on ne veut pas trop perturber le fonctionnement de l'installation ; l'installation fonctionne par exemple en début d'hiver), alors le cycle du premier étage 16 est inversé (l'évaporateur génère de la chaleur), la pompe 22 est mise en route (l'énergie du contenant 20 est ainsi utilisée pour le dégivrage) et la vanne V1 est ouverte (les deux circuits fonctionnent alors indépendamment) ;
- et si la température du contenant (contrôlée par au moins un capteur de température) tombe en dessous d'un seuil prédéterminé (température de l'eau du contenant considérée comme trop basse pour permettre le dégivrage par inversion de cycle ou approchant de son point de congélation), alors la vanne V1 est fermée afin de puiser des calories dans le circuit de chauffage.

On notera qu'en mode de chauffage haute température, lors du dégivrage il est possible de continuer à faire fonctionner ou d'arrêter le compresseur de l'étage haute température 18 (ce compresseur est représenté à la figure 4), sans engendrer de perturbations pénalisant le fonctionnement de la boucle intérieure de chauffage (perturbations minimes).

La figure 4 est une vue plus détaillée d'un exemple d'installation 10 mettant en oeuvre le procédé de fonctionnement suivant les deux modes basse et haute température tel que décrit ci-dessus.

Sur cette figure sont représentés :
- les composants du premier étage 16 : évaporateur Ev1, compresseur Cp1, détendeur Dt1, vanne d'inversion de cycle Vic et condenseur Cd1,
- un ventilateur 17 assurant la circulation de l'air extérieur AE sur l'évaporateur Ev1,
- les composants du deuxième étage 18: évaporateur Ev2, compresseur Cp2, détendeur Dt2 et condenseur Cd2,
- différents éléments du circuit de chauffage 39 : des émetteurs 40, 42, par exemple au nombre de deux, tels que, par exemple, des radiateurs (un nombre plus élevé d'émetteurs peut être envisagé et différents types d'émetteurs peuvent aussi être envisagés en plus ou en remplacement de ceux-ci), une conduite de départ 41 et une conduite de retour 43 auxquelles sont raccordés les différents émetteurs.

Un purgeur d'air 44 et un vase d'expansion 46 sont tous deux par exemple montés sur la conduite 34 (ou par exemple sur la conduite 12).

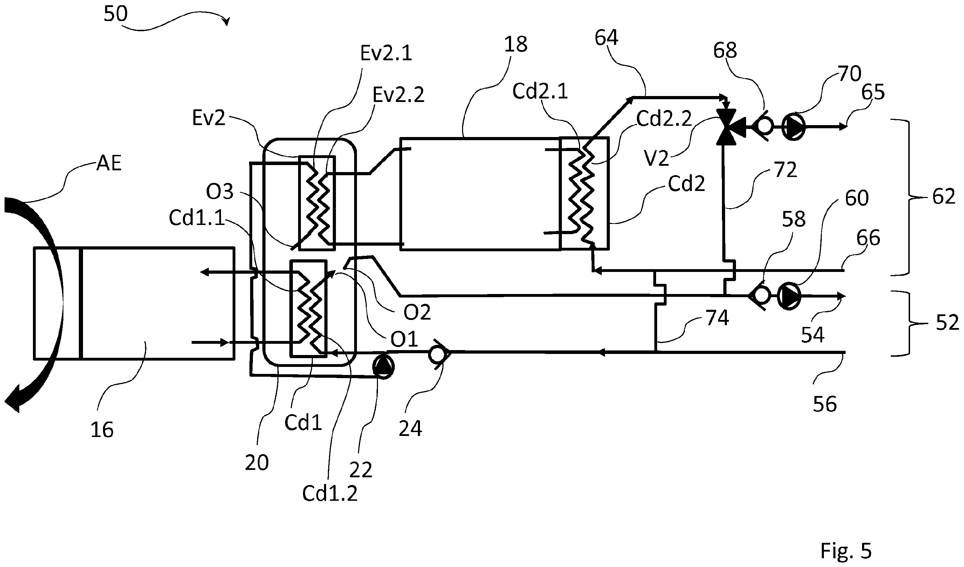

La figure 5 illustre une installation de chauffage 50 selon un deuxième mode de réalisation de l'invention. L'installation 50 comporte les mêmes deux étages thermodynamiques 16 et 18 que sur les figures 1 à 4. Le circuit de chauffage 12 des figures 1 à 4 a été remplacé par deux circuits de chauffage distincts : un premier circuit de chauffage basse température non détaillé mais simplement illustré par la référence 52 et un deuxième circuit de chauffage haute température non détaillé mais simplement illustré par la référence 62.

L'installation comprend une conduite de départ 54 vers le premier circuit de chauffage 52 et une conduite de retour 56 provenant de ce circuit et identique à la conduite 12 des figures 1 à 4.

La conduite de départ 54 reprend la conduite 26 des figures 1 à 4 mais prolonge celle-ci directement vers le départ du circuit de chauffage sans passer par le condenseur Cd2 du deuxième étage 18. La conduite de départ 54 est équipée d'un organe anti-retour de flux (ex : clapet anti-retour) 58 et d'un dispositif de pompage 60 tel qu'une pompe. La conduite de départ 54 envoie l'eau chauffée au secondaire Cd1.2 du condenseur Cd du premier étage 16 vers le départ du circuit de chauffage et les éléments d'émission de chaleur non représentés ici. Ces éléments d'émission de chaleur peuvent être identiques à ceux de la figure 4 ou différents en type (ex : plancher chauffant) et/ou en nombre.

L'installation comprend une conduite de départ 64 vers le second circuit de chauffage 62 et une conduite de retour 66 provenant de ce circuit et qui retourne l'eau du circuit au secondaire Cd2.2 du condenseur Cd2 du deuxième étage 18 (le secondaire Cd2.2 chauffe l'eau alimentant la conduite de départ 64).

La conduite de départ 64 comporte successivement une vanne trois voies directionnelle V2, un organe anti-retour de flux (ex : clapet anti-retour) 68 et un dispositif de pompage 70 tel qu'une pompe. L'organe 68 et le dispositif 70 sont tous deux montés sur une portion de conduite 65 qui alimente directement le départ du circuit haute température et les éléments d'émission de chaleur non représentés ici. Ces éléments d'émission de chaleur peuvent être identiques à ceux de la figure 4 ou différents en type (ex : plancher chauffant) et/ou en nombre.

Alternativement, le deuxième circuit de chauffage haute température 62 peut être utilisé uniquement pour la préparation d'eau chaude sanitaire (ECS) en alimentant un chauffe-eau à serpentin de chauffage par exemple. Dans cette application possible, le premier circuit de chauffage basse température assure la totalité des besoins de chauffage du ou des locaux au(x)quel(s) est associée l'installation 50.

La conduite 64 est raccordée à une première voie de la vanne V2, tandis que la portion de conduite 65 est raccordée à une deuxième voie de la vanne V2.

L'installation comporte également :
- une conduite ou branche de dérivation 72 qui raccorde la conduite de départ 54 à la troisième voie de la vanne V2,
- une conduite ou branche de dérivation 74 qui raccorde la conduite de retour 56 à la conduite de retour 66.

Dans l'installation 50 les deux circuits 52 et 62 ont chacun leur niveau de température propre. Le premier circuit basse température 52 ne peut fonctionner qu'à basse température. Le deuxième circuit haute température 62 peut, quant à lui, fonctionner à basse température, puis à haute température.

Les deux circuits 52 et 62 peuvent fonctionner en parallèle, indépendamment l'un de l'autre, excepté le fait qu'ils puisent tous deux leur énergie dans le contenant immergé 20.

Le fait d'avoir deux départs possibles (deux conduites de départ différentes) d'eau chaude procure de la souplesse à l'installation.

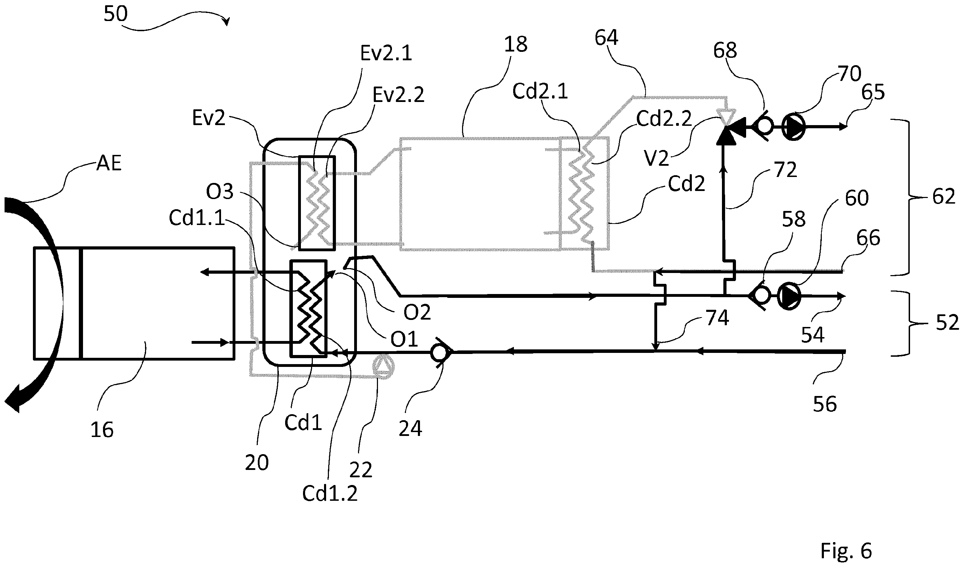

La figure 6 illustre le fonctionnement des deux circuits de l'installation en mode de fonctionnement basse température.

Dans ce mode, seul le premier étage 16 fonctionne et alimente des deux circuits de chauffage 52 et 62.

Les pompes 60 et 70 des deux circuits fonctionnent tandis que la pompe 22 qui assure la recirculation dans le contenant 20 est à l'arrêt. Cette situation est normale dans la mesure où le primaire Ev2.1 de l'évaporateur Ev2 du deuxième étage 18 n'a pas besoin d'être alimenté.

La vanne trois voies V2 n'autorise le passage de l'eau chaude de départ provenant de la conduite de départ 54 (premier circuit) que de la conduite de dérivation 72 vers la portion de conduite de départ 65 (deuxième circuit).

Ainsi, les deux circuits de chauffage 52 et 62 sont alimentés en énergie en parallèle à partir du condenseur Cd1 du premier étage 16.

On notera qu'un tel fonctionnement est valide jusqu'à une température de départ qui est par exemple égale à 55°C.

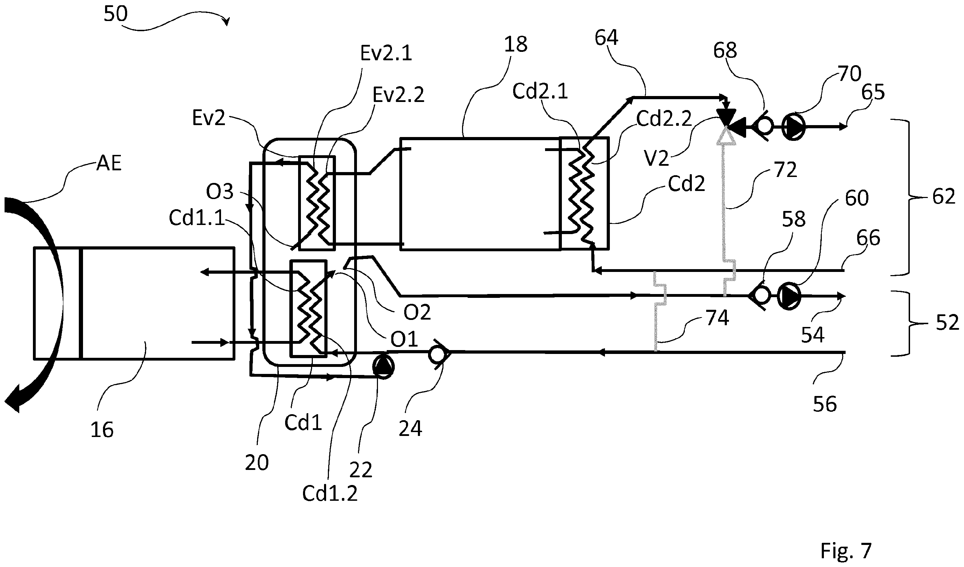

La figure 7 illustre le fonctionnement indépendant des deux circuits de l'installation (souplesse de fonctionnement de l'installation), pour le circuit 52, en mode basse température, et pour le circuit 62, en mode haute température.

Dans ce mode, les deux étages 16 et 18 fonctionnent ainsi que la pompe de recirculation 22 du contenant 20.

La vanne trois voies V2 interdit le passage de l'eau par la conduite 72, ce qui interdit également la circulation d'eau dans la conduite 74.

Dans ce mode le deuxième circuit haute température 62 est chauffé uniquement par le condenseur Cd2 du deuxième étage 18 à une température de départ qui est par exemple supérieure à 55°C.

L'eau de retour du premier circuit basse température 52 (eau ramenée par la conduite 56) à laquelle s'ajoute l'eau de recirculation du contenant 20 générée par la pompe 22 (les deux débits d'eau s'additionnent à l'entrée du secondaire Cd1.2 du condenseur Cd1) est envoyée dans le secondaire Cd1.2 où elle est chauffée à basse température.

L'eau du premier circuit 52 est prélevée dans le contenant 20 par l'orifice O2 et part directement dans la conduite de départ 54 vers le premier circuit.

De manière analogue à ce qui a été décrit en référence au mode de fonctionnement de la figure 3 la pompe 22 fait circuler de l'eau du contenant 20 dans le primaire Ev2.1 de l'évaporateur Ev2 du deuxième étage 18 via l'orifice O3. Le deuxième étage 18 prélève de l'énergie dans le contenant 20, au niveau de son évaporateur Ev2, et en fournit au niveau de son condenseur Cd2 à l'eau du deuxième circuit 62.

L'installation 50 peut comprendre les mêmes éléments/composants que ceux illustrés sur la figure 4, notamment en ce qui concerne les deux étages thermodynamiques 16 et 18.

On notera que les deux compresseurs des installations 10 et 50 peuvent être à vitesse variable ou à régime fixe. Alternativement, l'un peut être à vitesse variable tandis que l'autre est à régime fixe.

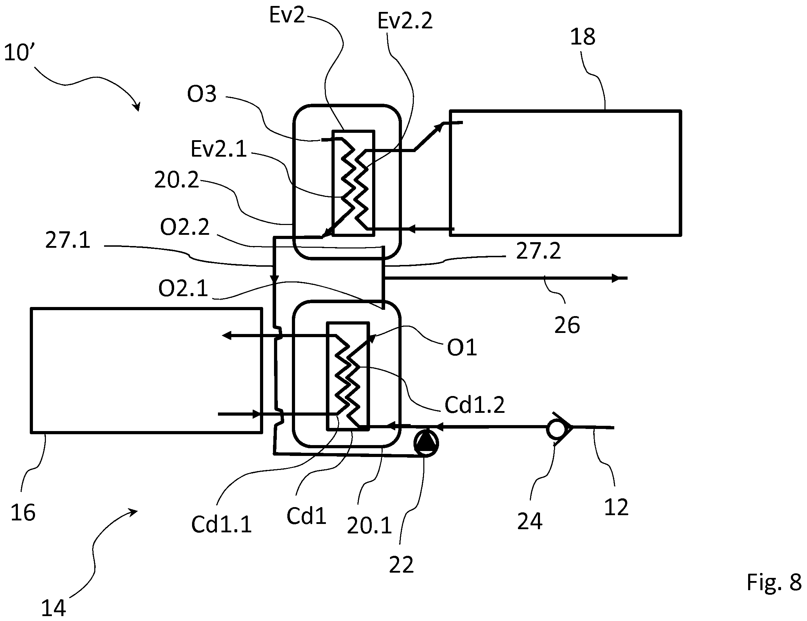

La figure 8 illustre un autre mode de réalisation de l'invention.

Tous les éléments inchangés par rapport à la figure 1 conservent les mêmes références.

Dans l'installation 10' de la figure 8 le condenseur Cd1 du premier étage 16 et l'évaporateur Ev2 du deuxième étage 18 sont logés dans deux contenants 20.1 et 20.2 distincts et séparés l'un de l'autre : le condenseur Cd1 est immergé dans un volume d'eau remplissant le contenant 20.1 et l'évaporateur Ev2 est immergé dans un volume d'eau remplissant le contenant 20.2.

Un premier conduit externe 27.1 relie la sortie du primaire Ev2.1 à l'entrée du secondaire Cd1.2, notamment via la pompe 22 montée sur le conduit.

Un second conduit externe 27.2 relie l'intérieur des deux contenants 20.1 et 20.2 et comporte deux extrémités opposées libres munies chacune d'un orifice O2.1 et O2.2 débouchant respectivement à l'intérieur des contenants 20.1 et 20.2. Ainsi, l'eau sortant du secondaire Cd1.2 et se déversant dans le contenant 20.1 peut emprunter l'orifice O2.1, le conduit 27.2 et sortir par l'orifice O2.2 dans le contenant 20.2, d'où elle peut sortir via l'orifice d'entrée O3 du primaire Ev2.1.

Le conduit externe 27.2 est en outre raccordé à la conduite 26 décrite en référence à la figure 1 et qui envoie l'eau sortant des réservoirs vers le circuit de chauffage.

On notera que le volume initial du contenant 20 est par exemple divisé en deux. Toutefois, les volumes respectifs des deux contenants 20.1 et 20.2 peuvent être répartis différemment, notamment en fonction des dimensions des deux échangeurs.

D'autres agencements de contenants et de conduits externes de liaison sont bien entendu envisageables. Comme pour les modes des figures précédentes, l'agencement des différents éléments de l'installation peut varier (ex : la pompe 22 peut être disposée à un endroit différent de l'installation sur le conduit 27 ou 27.1 et il en est de même pour la pompe 36). De même, les éléments tels que les organes 24, V1, V2, 58, 60, 68, 70... peuvent être agencés différemment et/ou remplacés par des éléments de structure différente (voire en nombre différent) et remplissant la même fonction. Par exemple, la vanne trois voies V2 peut être remplacée par trois vannes simples.

L'installation 10' peut également s'appliquer à plusieurs circuits de chauffage, notamment deux circuits comme sur les figures 5 à 7.

Les différents modes de fonctionnement décrits ci-dessus en relation avec les figures 2 à 7 sont également applicables à l'installation 10'.

## Revendications

1. Installation de chauffage utilisant le principe de la pompe à chaleur air/eau et comprenant :
- au moins un circuit de chauffage (39 ; 52,62) dans lequel de l'eau est apte à circuler,
- un système de pompe à chaleur (PAC) relié audit au moins un circuit de chauffage et qui est apte à chauffer l'eau dudit au moins un circuit de chauffage, le système de PAC comprenant deux étages (16, 18) qui comportent chacun un compresseur, un condenseur, un détendeur et un évaporateur, le premier étage (16) étant configuré pour opérer dans un mode de chauffage basse température entre l'air extérieur et l'eau provenant du retour dudit au moins un circuit de chauffage , le deuxième étage (18) étant configuré pour opérer dans un mode de chauffage haute température entre, d'une part, une conduite (12) reliée au retour dudit au moins un circuit de chauffage et, d'autre part, une conduite de sortie (34) reliée au départ dudit au moins un circuit de chauffage, **caractérisée en ce que** le condenseur (Cd1) du premier étage et l'évaporateur (Ev2) du deuxième étage sont configurés soit pour être immergés dans un même contenant (20) d'eau soit pour être immergés respectivement dans deux contenants (20.1, 20.2) d'eau communiquant entre eux par un ou plusieurs conduits (27.1, 27.2), le primaire (Ev2.1) de l'évaporateur (Ev2) du second étage (18) et le secondaire (Cd1.2) du condenseur (Cd1) du premier étage (16) utilisant la même eau du ou des contenants.

2. Installation de chauffage selon la revendication 1, **caractérisée en ce que** l'eau utilisée par le primaire (Ev2.1) de l'évaporateur du second étage et le secondaire (Cd1.2) du condenseur du premier étage est soit commune avec ledit au moins un circuit de chauffage de l'installation soit séparée dudit au moins un circuit de chauffage de l'installation.

3. Installation de chauffage selon l'une des revendications 1 à 2, **caractérisée en ce que**, en mode de chauffage basse température, l'installation est configurée pour que le secondaire (Cd1.2) du condenseur du premier étage soit en communication directe avec ledit au moins un circuit de chauffage.

4. Installation de chauffage selon l'une des revendications 1 à 3, **caractérisée en ce que**, en mode de chauffage haute température, l'installation est configurée pour que l'eau dudit au moins un circuit de chauffage alimente le secondaire (Cd2.2) du condenseur (Cd2) du deuxième étage (18) et n'alimente plus le secondaire (Cd1.2) du condenseur du premier étage.

5. Installation de chauffage selon l'une des revendications 1 à 4, **caractérisée en ce que** l'installation comprend au moins un organe de contrôle de flux (V1) entre l'entrée du secondaire (Cd1.2) du condenseur du premier étage et l'entrée du secondaire (Cd2.2) du condenseur du deuxième étage, ledit au moins un organe de contrôle de flux (V1) permettant à l'installation, en passant d'un état ouvert à un état fermé ou inversement, de fonctionner en mode de chauffage basse température ou haute température.

6. Installation de chauffage selon l'une des revendications 1 à 5, **caractérisée en ce que** l'installation comprend un dispositif de pompage (22) qui est actionné afin de mettre en recirculation l'eau dans le contenant (20), ou les contenants (20.1, 20.2) s'il y en a deux, en boucle entre le condenseur (Cd1) et l'évaporateur (Ev2) de sorte que, d'une part, l'eau sortant du secondaire (Cd1.2) du condenseur alimente le primaire (Ev2.1) de l'évaporateur et, d'autre part, l'eau sortant du primaire (Ev2.1) de l'évaporateur alimente le secondaire (Cd1.2) du condenseur.

7. Installation de chauffage selon l'une des revendications 1 à 6, **caractérisée en ce que** ledit au moins un circuit de chauffage comprend deux circuits de chauffage distincts, un premier circuit de chauffage basse température (52) et un second circuit de chauffage haute température (62).

8. Installation de chauffage selon la revendication 7, **caractérisée en ce que** l'installation est configurée pour que, en mode de chauffage basse température des deux circuits, l'eau de retour du premier (52) et du second circuit de chauffage (62) alimente l'entrée du secondaire (Cd1.2) du condenseur du premier étage où elle est chauffée et la sortie du secondaire (Cd1.2) du condenseur du premier étage alimente à la fois le départ du premier circuit de chauffage (52) et le départ du deuxième circuit de chauffage (62).

9. Installation de chauffage selon la revendication 7 ou 8, **caractérisée en ce que** l'installation est configurée pour que, en mode de chauffage basse température du premier circuit (52) et en mode de chauffage haute température du deuxième circuit (62) :
- l'eau de retour du premier circuit de chauffage (52) alimente l'entrée du secondaire (Cd1.2) du condenseur du premier étage où elle est chauffée et la sortie du secondaire (Cd1.2) du condenseur du premier étage alimente à la fois le départ du premier circuit de chauffage (52) et l'entrée de l'évaporateur (Ev2.1) du deuxième étage,
- l'eau est également mis en recirculation en boucle dans le contenant (20), ou les contenants (20.1, 20.2) s'il y en a deux, grâce au dispositif de pompage actionné (22),
- l'eau de retour du second circuit de chauffage (62) alimente l'entrée du secondaire du condenseur du deuxième étage où elle est chauffée et la sortie du secondaire (Cd2.2) du condenseur du deuxième étage (18) alimente le départ du deuxième circuit de chauffage (62).

10. Installation de chauffage selon l'une des revendications 7 à 9, **caractérisée en ce qu'**elle comporte un organe de contrôle de flux (V2) qui est configuré, d'une part, pour permettre à l'eau chauffée provenant du secondaire (Cd1.2) du condenseur du premier étage d'alimenter à la fois le départ du premier circuit de chauffage (52) et le départ du deuxième circuit de chauffage (62), en mode de chauffage basse température des deux circuits et, d'autre part, pour rendre indépendants les deux circuits de chauffage , en mode de chauffage basse température du premier circuit et en mode de chauffage haute température du deuxième circuit.

## Patentansprüche

1. Heizanlage, die das Prinzip der Luft/Wasser-Wärmepumpe verwendet und umfasst:
- mindestens einen Heizkreis (39; 52,62), in welchem das Wasser imstande ist zu zirkulieren,
- ein Wärmepumpensystem (PAC), das mit dem mindestens einen Heizkreis verbunden ist und das imstande ist, das Wasser des mindestens einen Heizkreises zu erwärmen, wobei das PAC-System zwei Stufen (16, 18) umfasst, die jeweils einen Kompressor, einen Kondensator, einen Druckregler und einen Verdampfer aufweisen, wobei die erste Stufe (16) konfiguriert ist, um in einem Niedrigtemperatur-Heizungsmodus zwischen der Außenluft und dem Wasser aus dem Rücklauf des mindestens einen Heizkreises zu arbeiten, wobei die zweite Stufe (18) konfiguriert ist, um in einem Hochtemperatur-Heizungsmodus zwischen zum einen einer Leitung (12), die mit dem Rücklauf des mindestens einen Heizkreises verbunden ist, und zum anderen einer Ausgangsleitung (34), die mit dem Anfang des mindestens einen Heizkreises verbunden ist, zu arbeiten, **dadurch gekennzeichnet, dass** der Kondensator (Cd1) der ersten Stufe und der Verdampfer (Ev2) der zweiten Stufe konfiguriert sind, um entweder in einen selben Wasserbehälter (20) eingetaucht zu sein oder um jeweils in zwei Wasserbehälter (20.1, 20.2) eingetaucht zu sein, die miteinander durch eine oder mehrere Leitungen (27.1, 27.2) kommunizieren, wobei der Primäre (Ev2.1) des Verdampfers (Ev2) der zweiten Stufe (18) und der Sekundäre (Cd1.2) des Kondensators (Cd1) der ersten Stufe (16) dasselbe Wasser des oder der Behälter nutzt.

2. Heizanlage nach Anspruch 1, **dadurch gekennzeichnet, dass** das von dem Primären (Ev2.1) des Verdampfers der zweiten Stufe und dem Sekundären (Cd1.2) des Kondensators der ersten Stufe verwendete Wasser entweder mit dem mindestens einen Heizkreis der Anlage gemeinsam ist oder von dem mindestens einen Heizkreis der Anlage getrennt ist.

3. Heizanlage nach einem der Ansprüche 1 bis 2, **dadurch gekennzeichnet, dass** die Anlage im Niedrigtemperatur-Heizungsmodus konfiguriert ist, damit der Sekundäre (Cd1.2) des Kondensators der ersten Stufe in direkter Kommunikation mit dem mindestens einen Heizkreis ist.

4. Heizanlage nach einem der Ansprüche 1 bis 3, **dadurch gekennzeichnet, dass** die Anlage im Hochtemperatur-Heizungsmodus konfiguriert ist, damit das Wasser des mindestens einen Heizkreises den Sekundären (Cd2.2) des Kondensators (Cd2) der zweiten Stufe (18) versorgt und nicht mehr den Sekundären (Cd1.2) des Kondensators der ersten Stufe versorgt.

5. Heizanlage nach einem der Ansprüche 1 bis 4, **dadurch gekennzeichnet, dass** die Anlage mindestens ein Fluss-Kontrollorgan (V1) zwischen dem Einlass des Sekundären (Cd1.2) des Kondensators der ersten Stufe und dem Einlass des Sekundären (Cd2.2) des Kondensators der zweiten Stufe umfasst, wobei das mindestens eine Fluss-Kontrollorgan (V1) der Anlage erlaubt, durch Wechseln aus einem offenen Zustand in einen geschlossenen Zustand oder umgekehrt im Niedrigtemperatur- oder Hochtemperatur-Heizungsmodus zu arbeiten.

6. Heizanlage nach einem der Ansprüche 1 bis 5, **dadurch gekennzeichnet, dass** die Anlage eine Pumpvorrichtung (22) umfasst, die betätigt wird, um das Wasser in dem Behälter (20) oder den Behältern (20.1, 20.2), wenn davon zwei vorhanden sind, in Schleife zwischen dem Kondensator (Cd1) und dem Verdampfer (Ev2) derart in Rezirkulation zu versetzen, dass zum einen das aus dem Sekundären (Cd1.2) des Kondensators austretende Wasser den Primären (Ev2.1) des Verdampfers versorgt und zum anderen das aus dem Primären (Ev2.1) des Verdampfers austretende Wasser den Sekundären (Cd1.2) des Kondensators versorgt.

7. Heizanlage nach einem der Ansprüche 1 bis 6, **dadurch gekennzeichnet, dass** der mindestens eine Heizkreis zwei unterschiedliche Heizkreise, einen ersten Niedrigtemperatur-Heizkreis (52) und einen zweiten Hochtemperatur-Heizkreis (62), umfasst.

8. Heizanlage nach Anspruch 7, **dadurch gekennzeichnet, dass** die Anlage konfiguriert ist, damit im Niedrigtemperatur-Heizungsmodus der zwei Kreise das Rücklaufwasser des ersten (52) und des zweiten Heizkreises (62) den Einlass des Sekundären (Cd1.2) des Kondensators der ersten Stufe versorgt, wo es erwärmt wird, und der Auslass des Sekundären (Cd1.2) des Kondensators der ersten Stufe sowohl den Anfang des ersten Heizkreises (52) und den Anfang des zweiten Heizkreises (62) versorgt.

9. Heizanlage nach Anspruch 7 oder 8, **dadurch gekennzeichnet, dass** die Anlage konfiguriert ist, damit im Niedrigtemperatur-Heizungsmodus des ersten Kreises (52) und im Hochtemperatur-Heizungsmodus des zweiten Kreises (62):
- das Rücklaufwasser des ersten Heizkreises (52) den Einlass des Sekundären (Cd1.2) des Kondensators der ersten Stufe versorgt, wo es erwärmt wird, und der Auslass des Sekundären (Cd1.2) des Kondensators der ersten Stufe sowohl den Anfang des ersten Heizkreises (52) und den Einlass des Verdampfers (Ev2.1) der zweiten Stufe versorgt,
- das Wasser ebenfalls in Rezirkulation in Schleife in dem Behälter (20) oder den Behältern (20.1, 20.2), wenn davon zwei vorhanden sind, dank der betätigten Pumpvorrichtung (22) versetzt wird,
- das Rücklaufwasser des zweiten Heizkreises (62) den Einlass des Sekundären des Kondensators der zweiten Stufe versorgt, wo es erwärmt wird, und der Auslass des Sekundären (Cd2.2) des Kondensators der zweiten Stufe (18) den Anfang des zweiten Heizkreises (62) versorgt.

10. Heizanlage nach einem der Ansprüche 7 bis 9, **dadurch gekennzeichnet, dass** sie ein Fluss-Kontrollorgan (V2) aufweist, das konfiguriert ist, um zum einen dem erwärmten Wasser aus dem Sekundären (Cd1.2) des Kondensators der ersten Stufe zu erlauben, zum einen den Anfang des ersten Heizkreises (52) und den Anfang des zweiten Heizkreises (62) im Niedrigtemperatur-Heizungsmodus der zwei Kreise zu versorgen und zum anderen, die Heizkreise im Niedrigtemperatur-Heizungsmodus des ersten Kreises und im Hochtemperatur-Heizungsmodus des zweiten Kreises unabhängig zu machen.

## Claims

1. A heating system using the principle of the air/water heat pump and including:
- at least one heating circuit (39; 52, 62) in which water is able to circulate,
- a heat pump (HP) system connected to said at least one heating circuit and which is able to heat the water of said at least one heating circuit, the HP system including two steps (16, 18) that each include a compressor, a condenser, an expander and an evaporator, the first step (16) being configured to operate in a low-temperature heating mode between the outside air and the water coming from the return of said at least one heating circuit, the second step (18) being configured to operate in a high temperature heating mode between, on the one hand, a pipe (12) connected to the return of said at least one heating circuit, and on the other hand, an outlet pipe (34) connected initially to said at least one heating circuit, **characterized in that** the condenser (Cd1) of the first step and the evaporator (Ev2) of the second step are configured either to be submerged in a same container (20) of water or to be submerged respectively in two containers (20.1, 20.2) of water communicating with one another by one or several pipes (27.1, 27.2), the primary (Ev2.1) of the evaporator (Ev2) of the second step (18) and the secondary (Cd1.2) of the condenser (Cd1) of the first step (16) using the same water of the container(s).

2. The heating system according to claim 1, **characterized in that** the water used by the primary (Ev2.1) of the evaporator of the second step and the secondary (Cd1.2) of the condenser of the first step is either shared with said at least one heating circuit of the system or separate from said at least one heating circuit of the system.

3. The heating system according to one of claims 1 to 2, **characterized in that**, in low-temperature heating mode, the system is configured so that the secondary (Cd1.2) of the condenser of the first step is in direct communication with said at least one heating circuit.

4. The heating system according to one of claims 1 to 3, **characterized in that**, in high-temperature heating mode, the system is configured so that the water of said at least one heating circuit supplies the secondary (Cd2.2) of the condenser (Cd2) of the second step (18) and no longer supplies the secondary (Cd1.2) of the condenser of the first step.

5. The heating system according to one of claims 1 to 4, **characterized in that** the system includes at least one flow control member (V1) between the inlet of the secondary (Cd1.2) of the condenser of the first step and the inlet of the secondary (Cd2.2) of the condenser of the second step, said at least one flow control member (V1) allowing the system, by going from an open state to a closed state or vice versa, to operate in low-temperature or high-temperature heating mode.

6. The heating system according to one of claims 1 to 5, **characterized in that** the system includes a pumping device (22) that is actuated in order to recirculate the water in the container (20), or the containers (20.1, 20.2) if there are two of them, in a loop between the condenser (Cd1) and the evaporator (Ev2) such that, on the one hand, the water leaving the secondary (Cd1.2) of the condenser supplies the primary (Ev2.1) of the evaporator and, on the other hand, the water leaving the primary (Ev2.1) of the evaporator supplies the secondary (Cd1.2) of the condenser.

7. The heating system according to one of claims 1 to 6, **characterized in that** said at least one heating circuit includes two separate heating circuits, a first low-temperature heating circuit (52) and a second high-temperature heating circuit (62).

8. The heating system according to claim 7, **characterized in that** the system is configured so that, in the low-temperature heating mode of the two circuits, the return water of the first (52) and second (62) heating circuits supplies the inlet of the secondary (Cd1.2) of the condenser of the first step where it is heated and the outlet of the secondary (Cd1.2) of the condenser of the first steps supplies both the starting point of the first heating circuit (52) and the starting point of the second heating circuit (62).

9. The heating system according to claim 7 or 8, **characterized in that** the system is configured so that, in the low-temperature heating mode of the first circuit (52) and in the high-temperature heating mode of the second circuit (62):
- the return water of the first heating circuit (52) supplies the inlet of the secondary (Cd1.2) of the condenser of the first step, where it is heated, and the outlet of the secondary (Cd1.2) of the condenser of the first step supplies both the starting point of the first heating circuit (52) and the inlet of the evaporator (Ev2.1) of the second step,
- the water is also recirculated in a loop in the container (20), or the containers (20.1, 20.2) if there are two of them, owing to the actuated pumping device (22),
- the return water of the second heating circuit (62) supplies the inlet of the secondary of the condenser of the second step where it is heated and the outlet of the secondary (Cd2.2) of the condenser of the second step (18) supplies the starting point of the second heating circuit (62).

10. The heating system according to one of claims 7 to 9, **characterized in that** it comprises a flow control member (V2) that is configured, on the one hand, to allow the heated water coming from the secondary (Cd1.2) of the condenser of the first step to supply both the starting point of the first heating circuit (52) and the starting point of the second heating circuit (62), in the low-temperature heating mode of the two circuits, and on the other hand, to make the two heating circuits independent, in the low-temperature heating mode of the first circuit and in the high-temperature heating mode of the second circuit.
